# EUROPÄISCHE PATENTSCHRIFT

(11) **EP 2 630 398 B1**
(45) Veröffentlichungstag und Bekanntmachung des Hinweises auf die Patenterteilung: **22.04.2015**
(21) Anmeldenummer: 11771192.9
(22) Anmeldetag: 21.10.2011
(51) Int. Cl.: F16L 55/02

(54) **BREITBANDDÄMPFER FÜR LADELUFTLEITUNGEN EINES VERBRENNUNGSMOTORS MIT TURBOLADER**
WIDE-BAND DAMPER FOR CHARGE AIR LINES OF AN INTERNAL COMBUSTION ENGINE WITH TURBOCHARGER
ATTÉNUATEUR À LARGE BANDE POUR CONDUITS D'AIR DE SURALIMENTATION DE MOTEUR À COMBUSTION INTERNE À TURBOCOMPRESSEUR

(30) Priorität: 22.10.2010 DE 102010042789
(43) Veröffentlichungstag der Anmeldung: 28.08.2013
(73) Patentinhaber: Umfotec Umformtechnik Gmbh, 37154 Northeim (DE); Denker, Dietrich, 73760 Ostfildern (DE)
(72) Erfinder: DENKER, Dietrich, 70599 Stuttgart (DE); HUTH, Stefan, 37154 Northeim (DE)
(74) Vertreter: Bauer, Wulf
(86) Internationale Anmeldenummer: PCT/EP2011/068441
(87) Internationale Veröffentlichungsnummer: WO 2012/052548

(56) Entgegenhaltungen:
- EP-A2- 1 469 186
- DE-A1- 10 317 224
- DE-A1- 19 943 246
- US-A- 2 308 886
- US-A- 3 187 837

## Beschreibung

Die Erfindung bezieht sich auf einen Breitbanddämpfer für Ladeluftleitungen eines Verbrennungsmotors mit Turbolader, wobei der Breitbanddämpfer insbesondere hinter dem Turbolader angeordnet ist, mit einem Einlass, einem Auslass und mit mindestens einer zwischen Einlass und Auslass angeordneten Schlitzkammer.

Ein derartiger Dämpfer bzw. Dämmer ist aus der DE 198 55 708 B4 bekannt. Dieser Dämpfer hat sich in der Praxis bewährt, er ist jedoch nicht ausreichend breitbandig. Unter breitbandig wird im Folgenden ein Dämpfer verstanden, der zwischen einer unteren Frequenz fu und einer oberen Frequenz fo eine Dämpfung oberhalb eines Schwellenwertes, beispielsweise oberhalb von 20 dB aufweist und bei dem die obere Frequenz fo mindestens das Dreifache der unteren Frequenz fu ist, insbesondere mindestens das Vierfache, vorzugsweise das Fünffache. Diese Dämpfung soll unter Betriebsbedingungen vorliegen.

Im Automobilbau werden zunehmend Verbrennungsmotoren mit Turboladern, insbesondere Einspritzmotoren mit Turboladern, eingesetzt. Dies führt zu Motoren mit immer kleinerem Hubraum und auch immer kleineren Abmessungen. Dadurch werden auch die Bauräume kleiner, der für die Schalldämmung zur Verfügung stehende Platz wird zunehmend geringer.

Die vom Motor abgegebenen Betriebsgeräusche sollen vorgegebenen Anforderungen und Vorstellungen entsprechen, es wird ein guter Klang (sound) des Motors gewünscht. Bei turbogeladenen Motoren treten Geräusche durch die Zerteilung der Ladeluft innerhalb des Turboladers auf, weitere Geräusche kommen hinzu. Insbesondere im menschlichen Hörbereich liegende Geräusche sollen soweit wie möglich gedämmt werden, es soll eine gewünschte Geräuschemission erreicht werden. Dabei fordern die Motorenentwickler zunehmend Schallminderungen in weiten Frequenzbereichen, beispielsweise im Bereich 2 000 bis 10 000 Hz, und dies bei kleinsten Bauräumen.

Der vorbekannte Dämpfer ist als Rohrkammerdämpfer ausgeführt, er hat zwei axial hintereinander angeordnete Schlitzkammern. Damit lässt sich die geforderte Mindestdämpfung nur in einem kleineren Frequenzbereich erzielen.

Gewünscht ist somit eine Dämpfung in einem ausreichend breiten Frequenzbereich und bei möglichst kleiner Bauform. Der Dämpfer soll sich günstig fertigen lassen, er soll aus einfach herzustellenden und zusammensetzbaren Bauteilen montierbar sein. Als Material kommen Metall und/oder geeignete Kunststoffe in Frage. Zu berücksichtigen sind eine Arbeitstemperatur von 180° C und darüber und ein Druck von üblicherweise 1,8 bar im Dämpfer.

Aufgabe der Erfindung ist es daher, den vorbekannten Dämpfer zu verbessern und dahingehend weiterzuentwickeln, dass er für einen breiteren Frequenzbereich ausgelegt ist, wobei die Abmessungen möglichst gering zu halten sind.

Diese Aufgabe wird gelöst durch den Dämpfer mit den Merkmalen des Anspruchs 1.

Durch Kombination aus abgestimmten Schlitzkammern und dahinter angeordneten, abgestimmten Spaltkammern wird ein Breitbanddämpfer erhalten, der eine minimale Dämpfung von 20 dB und darüber für ein Frequenzverhältnis von fo/fu ≥ 4, beispielsweise im Bereich von 5 liefert. Der Frequenzbereich beträgt beispielsweise 2 000 Hz bis 10 000 Hz. Beginnend am Einlass werden die Volumina der Hohlkammern der einzelnen Schlitzkammern zunehmend kleiner. Jede Schlitzkammer ist für eine eigene Frequenz ausgelegt. Hinter den mindestens drei Schlitzkammern sind mindestens drei Spaltkammern angeordnet. Auch hier nehmen die von den Hohlräumen der Spaltkammern begrenzten Volumina zum Auslass hin schrittweise ab. Die Anordnung der Schlitzkammern ist für eine Dämpfung in einem unteren Teilbereich der Frequenz des Dämpfungsbereichs vorgesehen, beispielsweise von 2000 bis 6000 Hz. Die Anordnung aus den Spaltkammern ist für eine Dämpfung in einem oberen Teil des Dämpfungsbereichs vorgesehen, beispielsweise im Bereich 6000 bis 10000 Hz. Die Frequenz 6000 Hz wird als Übergangsfrequenz bezeichnet, sie kann auch andere Werte als den angegebenen Wert haben. Sie liegt zwischen der Frequenz der Spaltkamer mit dem größten Volumen und der Frequenz der Schlitzkammer mit dem kleinsten Volumen.

In einer kinematischen Umkehr ist es auch möglich, Einlass und Auslass zu vertauschen. Dabei bleibt die Bauweise gleich, es wird lediglich die Richtung der Durchströmung des Dämpfers geändert.

Durch die Kombination von mehreren Schlitzkammern und mehreren Spaltkammern wird eine bisher nicht bekannte, extrem hohe und hinsichtlich der Frequenzlage durchgängig breite Dämmung erzielt.

Unter einer Schlitzkammer wird ein Resonator verstanden, der einen Schlitz und eine Hohlkammer aufweist. Die Hohlkammer ist über den Schlitz mit einem Innenraum des Dämpfers verbunden und zugänglich. Der Schlitz erstreckt sich über einen nur geringen Teil der axialen Länge, über den sich die Hohlkammer erstreckt, beispielsweise weniger als 20%, insbesondere weniger als 10% der axialen Länge der Hohlkammer. Schlitzkammern werden auch als Helmholtzresonatoren bezeichnet. Unter einer Spaltkammer werden Resonatoren verstanden, die einen Spalt und einen Hohlraum aufweisen. Der Hohlraum ist über seine gesamte axiale Länge über den Spalt zugänglich. Spaltkammern werden auch als Lambda/4-Resonatoren bezeichnet. Lambda ist die Wellenlänge.

Vorzugsweise sind die Spaltkammern als Wellkammern ausgebildet. Sie können durch ein Wellrohr realisiert sein, das sich vom Einlass zum Auslass hin verjüngt, beispielsweise konisch verjüngt. Zwischen Einlass und Auslass erstreckt sich ein Kanal des Innenraums. Er wird durch einen Zylinder definiert. Der Kanal kommuniziert mit den Schlitzen und Spalten. Diese erstrecken sich vorzugsweise jeweils über 360°.

Vorzugsweise wird der Kanal im Bereich der Schlitzkammern durch ein Innenrohr gebildet. Bei der Anordnung der Spaltkammern wird der Kanal vorzugsweise durch Rippen eines Wellrohrs begrenzt.

Es ist möglich, das Wellrohr so auszubilden, dass es flexibel ist, sich also wie ein Faltenbalg verhält, beispielsweise ein metallischer Balg. Damit sind Bewegungen des Auslasses gegenüber dem Einlass möglich, beispielsweise im Bereich von 10 bis 20 mm quer zur Achse, bzw. 10 Grad oder bis 20 Grad Abweichung der Einlassachse von der Auslassachse.

Der Breitbanddämpfer ist bevorzugt gradlinig, so dass seine Achse gradlinig durchläuft. Er kann aber auch gekrümmt verlaufen. Insbesondere können Einlass und Auslass in einem Winkel von mehr als 10°, vorzugsweise von mehr als 20° zueinander verlaufen.

Weitere Vorteile und Merkmale ergeben sich aus den übrigen Ansprüchen sowie aus der nun folgenden Beschreibung eines nicht einschränkend zu verstehenden Ausführungsbeispiels der Erfindung, das unter Bezugnahme auf die Zeichnung näher erläutert wird. In der Zeichnung zeigen:
- Fig. 1:: ein axiales Schnittbild eines Rohrkammerdämpfers, und
- Fig. 2:: eine perspektivische Ansicht des Rohrkammerdämpfers nach Fig. 1

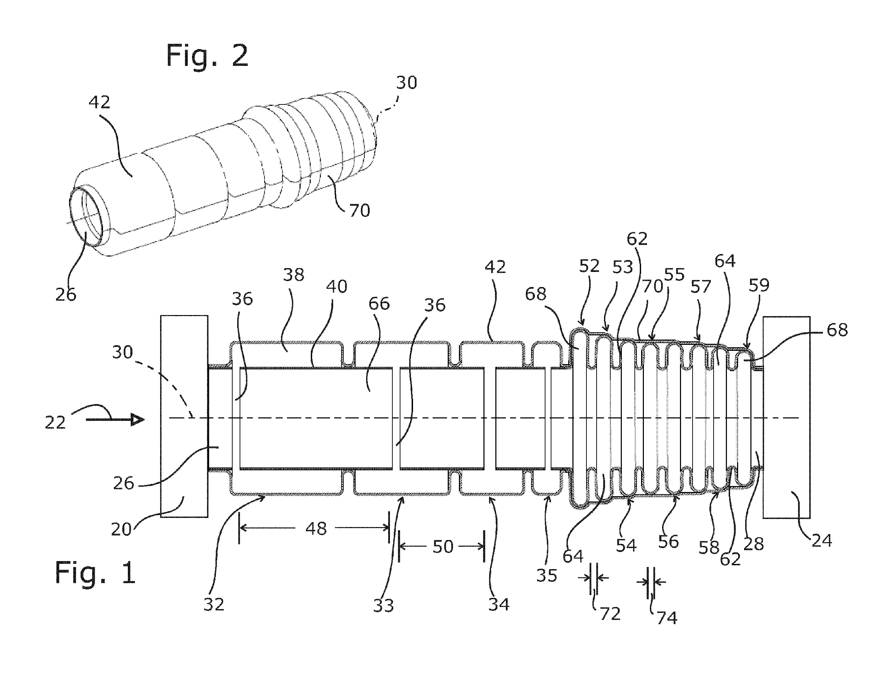

Figur 1 zeigt schematisch angedeutet einen Turbolader 20, in den entsprechend dem Pfeil 22 Luft einströmt. Die verdichtete Luft strömt durch einen Breitbanddämpfer in einen Verbrennungsmotor 24. Der Breitbanddämpfer ist Bestandteil einer Ladeluftleitung. Zwischen Turbolader 20 und Verbrennungsmotor 24 können noch weitere Bauteile der Ladeluftleitung vorgesehen sein. Der Dämpfer kann auch in einer Ladeluftleitung, die vor dem Turbolader angeordnet ist, angeordnet sein.

Der Breitbanddämpfer hat einen Einlass 26 und einen Auslass 28. Er ist geradlinig aufgebaut, er hat eine Achslinie 30, die geradlinig verläuft.

Bei der Beschreibung des Breitbanddämpfers wird der Begriff "vorn" für ein Objekt verwendet, das näher am Einlass 26 liegt als ein damit verglichenes Teil. Es wird also auf die Richtung der Durchströmung entsprechend dem Pfeil 22 abgestellt.

Der Breitbanddämpfer hat vier Schlitzkammern 32 - 35, die axial hintereinander angeordnet sind. Jede Schlitzkammer 32 - 35 hat einen Spalt 36 und eine Hohlkammer 38. Jede Schlitzkammer 32 - 35 wird begrenzt durch ein Innenrohr 40, ein Außenrohr 42 und radiale Wände. Das Innenrohr 40 ist ein zylindrisches Rohr. Es besteht aus insgesamt vier Teilstücken. Zwischen diesen Teilstücken werden die ersten drei Schlitze 36 ausgebildet, der vierte Schlitz wird zwischen dem letzten Teilstück und einem Wellrohr 44 gebildet. Die Schlitze 36 erstrecken sich jeweils über 360° und haben jeweils konstante Breite, in axialer Richtung gemessen.

Das Außenrohr 42 ist ähnlich einer Rechteckkurve im Querschnitt ausgebildet. Es ist jeweils mit jedem der Teilstücke des Innenrohrs 40 verbunden, so dass eine stabile Einheit erzielt wird. Das Außenrohr 42 bildet auch die radialen Wände aus, zwei radiale Wände 46 begrenzen jeweils eine Schlitzkammer in axialer Richtung. Dabei haben benachbarte Schlitzkammern nicht dieselbe radiale Wand, vielmehr separate radiale Wände 46. Dies führt zu einer besseren Entkoppelung. Es ist aber auch möglich, eine gemeinsame radiale Wand 46 für benachbarte Schlitzkammern vorzusehen.

Jede Schlitzkammer ist für eine unterschiedliche Frequenz ausgelegt. Man erkennt, dass die Schlitzkammern vom Einlass 26 zum Auslass 28 gesehen zunehmend ein kleineres Volumen begrenzen.

Die Schlitzkammern 32 bis 35 unterscheiden sich auch in der axialen Lage ihrer Schlitze 36. Während die erste Schlitzkammer 32 einen Schlitz 36 hat, der mit der ersten radialen Wand 46 fluchtet und damit soweit wie überhaupt möglich in Nähe des Einlasses 26 liegt, liegt der Schlitz 36 der zweiten Schlitzkammer 33 schon mehr in der Mitte der Hohlkammer 38, aber noch auf der Einlassseite. Dies setzt sich bei den weiteren Schlitzkammern 34 und 35 so fort.

Eingezeichnet in Figur 1 ist ein lichter Abstand 48 zwischen den Schlitzen 36 der ersten Schlitzkammer 32 und der zweiten Schlitzkammer 33. Weiterhin ist ein lichter Abstand 50 zwischen den Schlitzen 36 der zweiten Schlitzkammer 33 und der dritten Schlitzkammer 34 eingezeichnet. Man erkennt, dass der lichte Abstand 48 größer ist als der lichte Abstand 50. Auch dies setzt sich für die weiteren Schlitzkammern 34, 35 so fort, der lichte Abstand zwischen Schlitzen 36 benachbarter Schlitzkammern nimmt vom Einlass 26 gesehen ab.

Die erste Schlitzkammer 32 ist für eine Frequenz f1 ausgelegt, die zweite Schlitzkammer 33 für eine Frequenz f2 usw.. Die Frequenz f1 ist tiefer als die Frequenz f2, die Frequenz f2 ist tiefer als die Frequenz f3 und die Frequenz f3 ist tiefer als die Frequenz f4.

Die Schlitzkammern 32 bis 35 haben einfach ausgebildete Schlitze 36. Sie können auch komplizierter ausgebildete Schlitze aufweisen, wie beispielsweise aus der DE 10 2008 032 491 A1 der Anmelderin bekannt ist. Diese Anmeldung wird mit ihrem vollen Offenbarungsgehalt in die vorliegende Patentanmeldung einbezogen.

Der Einlass 26 wird gemeinsam durch das Innenrohr 40 und durch das Außenrohr 42 gebildet.

Die Schlitze 36 haben in axialer Richtung eine Breite, die kleiner ist als 10% der axialen Länge der zugehörigen Hohlkammer 38, dies gilt beispielsweise für die erste Schlitzkammer 32. Bei der dritten Schlitzkammer 33 ist die Schlitzbreite kleiner als 20% der axialen Länge der Hohlkammer 38. Die sonstigen Schlitzkammern liegen dazwischen.

Die Anordnung aus den vier Schlitzkammern 32 bis 35 ist für die Dämmung eines unteren Frequenzbereichs zuständig, für den der Breitbanddämpfer ausgelegt ist, beispielsweise im Bereich 2000 bis 6000 Hz.

Hinter dieser Anordnung aus den vier Schlitzkammern 32 bis 35 schließt sich eine Anordnung aus acht Spaltkammern 52 bis 59 an. Die Anordnung aus den acht Spaltkammern 52 bis 59 ist für die Dämmung eines oberen Frequenzbereichs zuständig, für den der Breitbanddämpfer ausgelegt ist, beispielsweise im Bereich 6000 bis 10000 Hz Die Spaltkammern 52 bis 59 werden durch ein Wellrohr 62 gebildet, das aus inneren Halbkreiselementen, radialen Scheiben und äußeren Halbkreiselementen aufgebaut ist. Jede Spaltkammer 52 bis 59 hat einen Spalt 64, der mit einem Kanal 66 kommuniziert, welcher durch die inneren Halbkreiselemente begrenzt ist. Auf der Seite der Schlitzkammern 32 bis 35 ist der Kanal 66 durch das Innenrohr 40 begrenzt. Die beschriebenen inneren Halbkreiselemente des Wellrohrs 32 liegen in Verlängerung des Innenrohrs 40. Jede Spaltkammer 52 bis 59 hat weiterhin eine Hohlkammer 68. Das Volumen der Hohlkammern 68 aller Spaltkammern 52 bis 59 ist jeweils unterschiedlich. Das Volumen nimmt schrittweise von Einlass 26 zum Auslass 28 hin ab, ihre axiale Breite bleibt weitgehend, innerhalb von 20%, gleich. Dementsprechend befindet sich der äußere Verlauf des Wellrohrs nicht auf einem Zylindermantel, sondern konvergiert zum Auslass 28 hin, er ist z.B. konisch. Während also die Spalte 64 aller Spaltkammern 52, 59 in Verlängerung des Innenrohrs 40 liegen, hat der Punkt größter Entfernung jeder Hohlkammer 68 von der Achslinie 30 für jede Spaltkammer 52 bis 59 einen unterschiedlichen Wert, der Wert nimmt von der ersten Spaltkammer 52 bis zur letzten Spaltkammer 59 hin stufig ab.

Es ist ein Mantelrohr 70 vorgesehen, das die Außenbereiche des Wellrohrs 62 übergreift und mit diesem verbunden ist. Dadurch wird eine stabile Anordnung im Bereich der Spaltkammern erhalten. Es ist auch möglich, dieses Mantelrohr 70 einstückig mit dem Außenrohr 42 auszubilden. Es ist auch möglich, auf das Mantelrohr 70 zu verzichten. Letzteres bringt den Vorteil, dass das Wellrohr 62 eine gewisse Elastizität haben kann, dadurch kann der Auslass 28 quer zur Achslinie 30 verschoben werden.

Die axiale Breite aller Spalte 64 der Spaltkammern 52 bis 59 ist für alle Spaltkammern 52 bis 59 im Wesentlichen gleich. Der lichte Abstand zwischen zwei Spaltkammern ist in Figur 1 als Maß 72 für den Abstand zwischen der ersten Spaltkammer 52 und der zweiten Spaltkammer 53 und als Maß 74 für den lichten Abstand zwischen der vierten Spaltkammer 55 und der fünften Spaltkammer 56 eingezeichnet. Man erkennt, dass die lichten Abstände für alle Spaltkammern 52 bis 59 im Wesentlichen gleich sind, jedenfalls maximal 30% voneinander abweichen.

Die Spaltkammern 52 bis 59 sind für unterschiedliche Frequenzen ausgelegt. Die Frequenzwerte steigen von der ersten Spaltkammer 52 mit der Frequenz f6 zur zweiten Spaltkammer 53 mit der Frequenz f7 usw. bis zur letzten Spaltkammer 59 hin an.

## Patentansprüche

1. Breitbanddämpfer für Ladeluftleitungen eines Verbrennungsmotors (24) mit Turbolader (20), wobei der Breitbanddämpfer insbesondere hinter dem Turbolader (20) anordenbar ist, mit einem Einlass (26), einem Auslass (28) und mit mindestens einer zwischen Einlass (26) und Auslass (28) angeordneten Schlitzkammer, **dadurch gekennzeichnet, dass** ausgehend vom Einlass (26) mindestens drei Schlitzkammern (32 bis 34) axial hintereinander angeordnet sind, die jeweils einen Schlitz (36) und eine Hohlraum (38) aufweisen wobei die Hohlraum (38) über den Schlitz (36) mit einem Innenraum des Dämpfers verbunden und zugänglich ist, und wobei sich der Schlitz (36) über einen nur geringen Teil der axialen Länge der Hohlraum (38) erstreckt, und wobei die Schlitzkammern (32 bis 35) für unterschiedliche Frequenzen f1, f2 und f3 dimensioniert sind, dass mindestens drei Spaltkammern (52 bis 54) vorgesehen sind, die jeweils einen Spalt (64) und einen Hohlraum aufweisen wobei der Hohlraum über seine gesamte axiale Länge über den Spalt (64) zugänglich ist, und wobei die Spaltkammern (52 bis 59) axial hintereinander angeordnet sind und die axial hinter den mindestens drei Schlitzkammern (32 bis 34) angeordnet sind, dass die Spaltkammern (52 bis 54) jeweils für unterschiedliche Frequenzen f6, f7 und f8 dimensioniert sind, und dass jede der Frequenzen f1, f2 und f3 der Schlitzkammern (32 bis 34) kleiner ist als jede der Frequenzen f6, f7 und f8 der Spaltkammern (52 bis 54).

2. Breitbanddämpfer nach Anspruch 1, **dadurch gekennzeichnet, dass** die Frequenzen f, für die die Kammern (32 bis 34, 52 bis 54) ausgelegt sind, vom Einlass (26) zum Auslass (28) hin jeweils ansteigen, so dass von zwei benachbarten Kammern die näher am Auslass (28) befindliche Kammer jeweils die höhere Frequenz hat als die andere Kammer.

3. Breitbanddämpfer nach einem der vorangegangenen Ansprüche, **dadurch gekennzeichnet, dass** der lichte Abstand zwischen den Spalten zweier benachbarter Spaltkammern in Axialrichtung gesehen kleiner ist als die axiale Breite jedes einzelnen Spalts (64) der beiden benachbarten Spaltkammern (52, 59) und/oder dass der lichte Abstand zwischen den Schlitzen (36) in Axialrichtung gesehen und gesehen vom Einlass (26) schrittweise kleiner wird.

4. Breitbanddämpfer nach einem der vorangegangenen Ansprüche 1 bis 3, **dadurch gekennzeichnet, dass** die Spaltkammern (52 bis 59) ein abgerundetes Profil aufweisen, insbesondere als Wellkammern ausgebildet sind.

5. Breitbanddämpfer nach einem der vorangegangenen Ansprüche, **dadurch gekennzeichnet, dass** ein Mantelrohr (70) vorgesehen ist, das sich zumindest über die Außenbereiche der Wände der Spaltkammern (52 bis 59) erstreckt.

6. Breitbanddämpfer nach einem der vorangegangenen Ansprüche, **dadurch gekennzeichnet, dass** die Schlitze (36) der Schlitzkammern (32 bis 35) so in Bezug auf die Hohlräume (38) der Schlitzkammern (32 bis 35) positioniert sind, dass bei zwei benachbarten Schlitzkammern der Schlitz (36) der dem Einlass (26) näher liegenden Schlitzkammer näher an einem einlassseitigen Ende der Hohlkammer (38) positioniert ist als der Schlitz (36) der benachbarten Kammer.

7. Breitbanddämpfer nach einem der vorangegangenen Ansprüche, **dadurch gekennzeichnet, dass** der Schlitz (36) der ersten, dem Einlass (26) zugewandten Schlitzkammer (32) sich in unmittelbarer Nähe einer eintrittsseitigen Radialwand dieser Hohlkammer (38) befindet.

8. Breitbanddämpfer nach einem der vorangegangenen Ansprüche, **dadurch gekennzeichnet, dass** die lichten Abstände in axialer Richtung gesehen zwischen zwei Spaltkammern (52 bis 59) für alle Spaltkammern (52, 59) im Wesentlichen gleich sind, jedenfalls nicht mehr als 30% voneinander abweichen.

9. Breitbanddämpfer nach einem der vorangegangenen Ansprüche, **dadurch gekennzeichnet, dass** die Gesamtzahl der Spaltkammern (52 bis 59) um mindestens zwei, vorzugsweise mindestens drei größer ist als die Gesamtzahl der Schlitzkammern (32, 33, 34, 35).

10. Breitbanddämpfer nach einem der vorangegangenen Ansprüche, **dadurch gekennzeichnet, dass** die Spaltkammern (52 bis 59) einstückig aus einem Wellrohr (62) mit vom Einlass (26) zum Auslass (28) hin abnehmender Außenabmessung gefertigt sind.

## Claims

1. A wide-band damper for charge air lines of an internal combustion engine (24) having a turbocharger (20), wherein the wide-band damper can be disposed in particular behind the turbocharger (20), comprising an inlet (26), an outlet (28) and at least one slit chamber disposed between the inlet (26) and the outlet (28), **characterized in that** extending from the inlet (26), at least three slit chambers (32 to 34) are disposed axially one behind the other, each of which has a slit (36) and a hollow chamber (38), wherein the hollow chamber (38) is connected to an interior of the damper via the slit (36) and is accessible via said slit, and wherein the slit (36) extends only over a small portion of the axial length of the hollow chamber (38), and wherein the slit chambers (32 to 35) are dimensioned for different frequencies f1, f2 and f3, that at last three gap chambers (52 to 54) are provided, each of which has a gap (64) and a hollow chamber, wherein the hollow chamber is accessible over its entire axial length via the gap (64), and wherein the gap chambers (52 to 59) are disposed axially one behind the other and are disposed axially behind the at least three slit chambers (32 to 34), that the gap chambers (52 to 54) are each dimensioned for different frequencies f6, f7 and f8, and that each of the frequencies f1, f2 and f3 of the slit chambers (32 to 34) is lower than each of the frequencies f6, f7 and f8 of the gap chambers (52 to 54).

2. The wide-band damper according to claim 1, **characterized in that** the frequencies f, for which the chambers (32 to 34, 52 to 54) are dimensioned, each increase from the inlet (26) towards the outlet (28) so that of two adjacent chambers, the chamber that is located closer to the outlet (28) has in each case a higher frequency than the other chamber.

3. The wide-band damper according to any one of the preceding claims, **characterized in that** viewed in the axial direction, the clear distance between the gaps of two adjacent gap chambers is smaller than the axial width of each individual gap (64) of the two adjacent gap chambers (52, 59) and/or that viewed in the axial direction and viewed from the inlet (26), the clear distance between the slits (36) becomes gradually smaller.

4. The wide-band damper according to any one of the preceding claims 1 to 3, **characterized in that** the gap chambers (52 to 59) have a rounded profile, and are in particular formed as corrugated chambers.

5. The wide-band damper according to any one of the preceding claims, **characterized in that** a jacket tube (70) is provided that extends at least over the outer regions of the walls of the gap chambers (52 to 59).

6. The wide-band damper according to any one of the preceding claims, **characterized in that** the slits (36) of the slit chambers (32 to 35) are positioned in relation to the hollow chambers (38) of the slit chambers (32 to 35) in such a manner that among two adjacent slit chambers, the slit (36) of the slit chamber that is closer to the inlet (26) is positioned closer to an inlet-side end of the hollow chamber (38) than the slit (36) of the adjacent chamber.

7. The wide-band damper according to any one of the preceding claims, **characterized in that** the slit (36) of the first slit chamber (32), which faces towards
the inlet (26), is located in immediate vicinity of an inlet-side radial wall of this hollow chamber (38).

8. The wide-band damper according to any one of the preceding claims, **characterized in that** viewed in the axial direction, the clear distances between two gap chambers (52 to 59) are substantially identical for all gap chambers (52, 59), in any case, they deviate from each other by no more than 30%.

9. The wide-band damper according to any one of the preceding claims, **characterized in that** the total number of gap chambers (52 to 59) is greater by at least two, preferably greater by at least three than the total number of slit chambers (32, 33, 34, 35).

10. The wide-band damper according to any one of the preceding claims, **characterized in that** the gap chambers (52 to 59) are fabricated integrally from a corrugated tube (62) having outer dimensions that decrease from the inlet (26) towards the outlet (28).

## Revendications

1. Amortisseur large bande pour conduites d'air de charge d'un moteur à combustion interne (24) avec turbocompresseur (20), dans lequel l'amortisseur large bande peut être disposé notamment derrière le turbocompresseur (20), avec une admission (26), un échappement (28) et avec au moins un compartiment à fentes disposé entre l'admission (26) et l'échappement (28), **caractérisé en ce que** à partir de l'admission (26) au moins trois compartiments à fentes (32 à 34) sont disposés axialement les uns derrière les autres, qui présentent respectivement une fente (36) et un espace creux (38), dans lequel l'espace creux (38) est relié et accessible par l'intermédiaire de la fente (36) avec un espace intérieur de l'amortisseur et dans lequel la fente (36) s'étend sur seulement une partie minime de la longueur axiale de l'espace creux (38) et dans lequel les compartiments à fentes (32 à 35) sont dimensionnés pour des fréquences différentes f1, f2 et f3, **en ce qu'**au moins trois compartiments à fentes (52 à 54) sont prévus, qui présentent respectivement un interstice (64) et un espace creux, dans lequel l'espace creux est accessible sur sa longueur axiale totale via la fente (64) et dans lequel les compartiments à fentes (52 à 59) sont disposés axialement les uns derrière les autres et qui sont disposés axialement derrière les trois compartiments à fentes (32 à 34), **en ce que** les compartiments à fentes (52 à 54) sont dimensionnés respectivement pour des fréquences différentes f6, f7 et f8 et **en ce que** chacune des fréquences f1, f2 et f3 des compartiments à fentes (32 à 34) est plus petite que chacune des fréquences f6, f7 et f8 des compartiments à fentes (52 à 54).

2. Amortisseur large bande selon la revendication 1, **caractérisé en ce que** les fréquences f sont conçues pour les chambres (32 à 34, 52 à 54), vont respectivement en augmentant de l'admission (26) à l'échappement (28), de sorte que de deux chambres voisines, la chambre se trouvant le plus près de l'échappement (28) a respectivement la fréquence plus haute que l'autre chambre.

3. Amortisseur large bande selon une des revendications précédentes, **caractérisé en ce que** la distance libre entre les interstices de deux compartiments à fentes voisins vus dans la direction axiale est plus petite que la largeur axiale de chaque interstice individuel (64) des deux compartiments à fentes voisins (52, 59) et/ou **en ce que** la distance libre entre les fentes (36) vue dans la direction axiale et vue depuis l'admission (26) devient progressivement plus petite.

4. Amortisseur large bande selon une des revendications précédentes 1 à 3, **caractérisé en ce que** les compartiments à fentes (52 à 59) présentent un profil arrondi, notamment sont conçus comme des compartiments ondulés.

5. Amortisseur large bande selon une des revendications précédentes, **caractérisé en ce que** une gaine tubulaire (70) est prévue, qui s'étend au moins sur les zones extérieures des parois des compartiments à fentes (52 à 59).

6. Amortisseur large bande selon une des revendications précédentes, **caractérisé en ce que** les fentes (36) des compartiments à fentes (32 à 35) sont positionnées par rapport aux espaces creux (38) des compartiments à fentes (32 à 35) de telle sorte que sur les deux compartiments à fentes voisins la fente (36) du
compartiment à fentes situé plus près de l'échappement (26) est positionné plus près sur une extrémité du côté d'admission du compartiment creux (38) que la fente (36) de la chambre voisine.

7. Amortisseur large bande selon une des revendications précédentes, **caractérisé en ce que** la fente (36) du premier compartiment à fentes (32) tournée vers l'admission (26) se trouve à proximité immédiate d'une paroi radiale du côté d'admission de ce compartiment creux (38).

8. Amortisseur large bande selon une des revendications précédentes, **caractérisé en ce que** les distances libres vues dans la direction axiale entre deux compartiments à fentes (52 à 59) pour tous les compartiments à fentes (52, 59) sont essentiellement identiques, dans tous les cas ne diffèrent pas de plus de 30% les unes des autres.

9. Amortisseur large bande selon une des revendications précédentes, **caractérisé en ce que** le nombre total des compartiments à fentes (52 à 59) est au moins deux, de préférence au moins trois fois plus grand que le nombre total des compartiments à fentes (32, 33, 34, 35).

10. Amortisseur large bande selon une des revendications précédentes, **caractérisé en ce que** les compartiments à fentes (52 à 59) sont fabriqués en un seul tenant à partir d'un tuyau ondulé (62) avec une dimension externe qui va en diminuant de l'admission (26) à l'échappement (28).
